# EUROPEAN PATENT SPECIFICATION

(11) **EP 2 975 237 B1**
(45) Date of publication and mention of the grant of the patent: **20.02.2019**
(21) Application number: 15176221.8
(22) Date of filing: 10.07.2015
(51) Int. Cl.: F02B 19/08, F02B 19/10, F02B 19/16

(54) **PRE-CHAMBER BOTTOM SECTION, PRE-CHAMBER, CYLINDER DEVICE, METHOD FOR MIXING OF GAS AND AIR AND IGNITION OF THE GAS-AIR -MIXTURE IN A PRE-CHAMBER AND A METHOD FOR SUBSTITUTING A PRE-CHAMBER**
VORKAMMERBODENABSCHNITT, VORKAMMER, ZYLINDERVORRICHTUNG, VERFAHREN ZUM MISCHEN VON GAS UND LUFT SOWIE ZÜNDUNG DES GAS-LUFT-GEMISCHS IN EINER VORKAMMER UND VERFAHREN ZUM ERSETZEN EINER VORKAMMER
SECTION INFÉRIEURE DE PRÉCHAMBRE, PRÉCHAMBRE, DISPOSITIF DE CYLINDRE, PROCÉDÉ DE MÉLANGE DE GAZ ET D'AIR ET ALLUMAGE DU MÉLANGE GAZ/AIR DANS UNE CHAMBRE DE PRÉCOMBUSTION ET PROCÉDÉ PERMETTANT DE REMPLACER UNE PRÉCHAMBRE

(30) Priority: 14.07.2014 EP 14176906
(43) Date of publication of application: 20.01.2016
(73) Proprietor: Winterthur Gas & Diesel Ltd., 8401 Winterthur (CH)
(72) Inventor: Ott, Marcel, 8406 Winterthur (CH); Nylund, Ingemar, 66580 Kuni (FI); Lusti, Hans-Rudolf, 8405 Winterthur (CH); Hattar, Christer, 8523 Hagenbuch (CH)
(74) Representative: Hepp Wenger Ryffel AG

(56) References cited:
- WO-A1-2009/114327
- WO-A2-2009/109694
- FR-A1- 2 653 825
- US-A- 1 917 883
- US-A- 4 966 103

## Description

The invention relates to a cylinder device comprising two pre-chambers and a method for mixing of gas and air and ignition of the gas-air-mixture in a pre-chamber.

Pre-chambers are utilised especially in so-called lean-burn-engines where a powerful ignition source is needed. In this case, a pre-chamber is used to provide a high energy for igniting the lean gas mixture in a main combustion chamber. In the pre-chamber the lean basic air-gas mixture coming from the main combustion chamber can be ignited either by the injection of a proper fuel, reactive in the excess of air and self-igniting beyond certain pressure and temperature conditions, or by means of a glow plug or a spark plug, combined with a local stoichiometric air-gas mixture that might be obtained adding the proper amount of gas directly in the pre-chamber. The shape of the pre-chamber is dependent on the actual method of ignition. Pilot fuel ignition with or without glow plug can provide higher ignition energy than a conventional spark pre-chamber ignition system. The requirements are generally fast and repeatable mixing of the basic air-gas fuel mixture introduced into the pre-chamber and of the pilot fuel to be injected. Although a number of pre-chamber arrangements are known, they are not able to meet the requirements described above at the same time.

US 5,293,851 discloses a combustion system for a gas engine comprising a pre-chamber. The pre-chamber is connected to the main combustion chamber by a simple duct. The duct is not flow-optimized and comprises sharp edges to the pre-chamber which leads to a short life cycle and a poor distribution of gas/air mixture being fed into the cylinder, especially in case of large engines, such as ship engines.

In DE 197 03 309 a pre-chamber is disclosed being produced from two parts. The pre-chamber is built symmetrically such that any flow going through the duct will lead to a vortex more than to a defined tumble flow motion.

WO 2009/109694 discloses a pre-chamber arrangement for an Otto cycle including several openings for symmetrically distributing the ignited gas/air mixture in a cylinder combustion chamber. Such a pre-chamber is prone to a frequent exchange of the part comprising the openings due to the high temperature destroying the small metal bridges between the openings.

Documents US1917883 and US4966103 disclose cylinder devices with a pre-chamber bottom section having an inclined duct section between an ignition chamber and a main combustion chamber which is enabling an asymmetric distribution of an ignited gas-air mixture.

It is therefore an object of the present invention to avoid the drawbacks of the prior art and to create a cylinder device and a method for mixing of gas and air and ignition of the gas-air-mixture.

The object is accomplished by a cylinder device according to claim 1, comprising two-pre-chambers, each pre-chamber comprising a pre-chamber bottom section and a pre-chamber top-section. The pre-chamber bottom section comprises an ignition chamber lower part with a vertical axis for igniting of the gas-air-mixture. The pre-chamber bottom section comprises a duct for connecting the ignition chamber lower part with a main combustion chamber of the cylinder. The duct comprises at least one duct longitudinal axis and an inlet opening of the duct to the ignition chamber lower part is formed such that the vertical axis has an inclination relative to the duct longitudinal axis. The inlet opening is arranged eccentrically, such that a tumble flow is formable in an ignition chamber. The duct comprises exactly one outlet opening which is arranged such that a gas-air mixture beam or gas-air mixture beams are formable being asymmetrically distributed relative to the vertical axis. Edges at the inlet opening are designed as soft edges.

Such a pre-chamber bottom section leads to an optimized distribution of gas and air and hence to an optimized ignition in the pre-chamber and in the main combustion chamber of the cylinder. Furthermore, the lifetime of the pre-chamber bottom section is extended.

The duct longitudinal axis can be arranged at an angle of substantially 0.1° to 80° relative to the vertical axis, preferably 10° to 45° and most preferably 16° to 30° relative to the vertical axis.

Such a duct leads to an optimal asymmetric distribution of gas-air mixture and an optimized tumble flow motion in the ignition chamber.

The ignited gas-air mixture beam can be introducible from the outlet opening or the outlet openings into the main combustion chamber only within a spherical sector of maximum 180° radially around a vertical axis and 90° axially to the vertical axis.

Such a design enables an optimized distribution of the ignited gas-air mixture into a main combustion chamber.

The duct comprises a duct section which is inclined relative to the duct longitudinal axis.

Such a design enables the creation of a pre-chamber with a flow-optimized duct inlet opening and an outlet opening of the duct which enables an asymmetric distribution of the ignited gas-air mixture. Nevertheless, an optimized flow within the channel is obtained.

A cross-section of the duct and/or the duct section can taper from inlet opening to outlet opening.

A tapering cross-section leads to an increase of the velocity of the flow through the duct and thereby an introduction of the gas-air mixture farther into the main combustion chamber. This leads to a more even combustion and a more stable process.

The inclination of the duct section relative to the vertical axis can be in a range from 0.2° to 90°, preferably 20° to 70° and more preferably 45° to 55°.

As a matter of course, the inclination of the duct section relative to the vertical axis and the inclination of the duct longitudinal axis relative to the vertical axis are preferably not chosen such that they extinguish the effect of each other. Hence, the inclination of the duct section is preferably chosen to be greater than the inclination of the duct. The inclination of the duct section leads to a possibility to position the pre-chamber outside the middle of the cylinder and yet feed the gas/air mixture into the middle of the combustion chamber and/or into the swirl of the gas-air stream within the combustion chamber. The use of two different inclinations leads to a smaller size of the pre-chamber bottom section and to a more easy production of the pre-chamber bottom section part.

A spherical cross-sectional widening can be arranged between duct and duct section.

A spherical cross-sectional widening between duct and duct section leads to the possibility of drilling the duct and the duct section with two different drill directions. This leads to lower production costs and a more precise part.

The duct can be designed in a curved way, preferably comprising a radius of curvature in a range of one half times a maximum cross-section of the ignition chamber normal to the vertical axis to two times a maximum cross section of the ignition chamber normal to the vertical axis.

Such a duct is flow-optimized and leads to an optimal flow velocity.

Preferably, the pre-chamber bottom section is produced by casting or precision casting.

A casted pre-camber bottom section is produced more easily and thus more cost effective. Furthermore, the design of the pre-chamber bottom section is less restriced.

The pre-chamber can comprise ignition means for ignition of the gas-air mixture, preferably an ignition plug or glow plug which extends into the ignition chamber.

The ignition chamber is built from the ignition chamber lower part of the pre-chamber bottom section and the pre-chamber top section.

Ignition means lead to the ignition of the gas-air mixture in the pre-chamber and thereby to an efficient combustion with increased combustion stability.

The pre-chamber can comprise a fuel feed, by means of which fuel is feedable into the pre-chamber.

The fuel feed is an alternative to an ignition means in case a self-ignition is used.

A relation between a volume of the ignition chamber and a sum of all cross-sections of the outlet openings or the cross-section of the outlet opening is in a range between 200 mm and 1000 mm.

Such a relation of the volumes leads to an optimized flow and flow velocity of the gas-air mixture into the combustion chamber of the cylinder device.

The volume of the ignition chamber corresponds to the volume of the pre-chamber except the volume of the duct.

The pre-chamber top section is designed asymmetrically relative to the vertical axis, preferably asymmetrically by an opening arranged at a distance from the vertical axis.

Hence, the inside wall of the pre-chamber top section has an asymmetric shape so that it is slightly shifted relative to the longitudinal axis. Preferably, the inner wall at the equatorial region of the ignition chamber at the side of the inlet opening comprises a smaller radius of curvature than the wall opposite to this point.

Such a design is flow-optimized and leads to an optimized combustion.

Such a cylinder device leads to a more efficient and stable combustion and can be used for two-stroke or four-stroke engines.

The cylinder device comprises two pre-chambers. Preferably, the two pre-chambers can be arranged in a cylinder cover.

The use of two pre-chambers leads to an optimized distribution of the gas-air mixture in the main combustion chamber, especially in case of large combustion chambers such as in combustion engines for ships.

The arrangement in the cylinder cover leads to an easy accessibility in case of substitution of pre-chambers or pre-chamber bottom sections.

The pre-chambers can be arranged eccentrically, preferably close to an inner diameter of the cylinder liner, preferably close to the inner diameter of the cylinder liner in the cylinder cover.

Close to the inner diameter of the cylinder liner according to the invention comprises every pre-chamber being arranged closer to the inner diameter of the cylinder liner than to the middle of the cylinder device.

Such an arrangement allows for an optimized distribution of gas-air mixture in the combustion chamber and thereby leads to a more efficient combustion.

Furthermore, even three or four pre-chambers arranged eccentrically close to the edge are possible, preferably uniformly distributed across the edge of the cylinder cover.

Such a design allows for an even more even distribution of ignited gas-air mixture.

According to another aspect of the invention there is provided a method for mixing of gas and air and ignition of the mixture in the pre-chambers of the cylinder device as previously described. The gas is mixed with air to create a gas-air mixture and the gas-air mixture is fed into the pre-chamber. The gas-air mixture is then ignited wherein a tumble flow motion is created in the pre-chamber and the ignited gas/air mixture is fed into the main combustion chamber through a duct. The flow of ignited gas-air mixture is deflected inside the duct and the flow velocity of the gas-air mixture is increased in the duct.

This way, the ignited gas-air mixture reaches deep into the combustion chamber and leads to a complete and efficient combustion.

Before igniting the gas-air -mixture, additional gas can be introduced into the pre-chamber.

This way the gas-air mixture ignites faster and more reliable.

The gas-air mixture can be fed to the main combustion chamber asymmetrically relative to the vertical axis of the main combustion chamber through at least one outlet opening from the pre-chamber. Due to the arrangement of the pre-chamber an asymmetric introduction of gas-air mixture into the main combustion chamber leads to an optimized combustion.

The gas-air mixture can be fed to the main combustion chamber through exactly one outlet opening per pre-chamber.

The use of exactly one outlet opening leads to a higher lifetime of the pre-chamber since the parts of the pre-chamber are more solid.

According to an embodiment, not covered by the invention, there is provided a method for substitution of a pre-chamber bottom section by dismounting a pre-chamber bottom section and mounting a pre-chamber bottom section as previously described.

Such a method leads to a cost optimized use of a pre-chamber due to its longer lifetime and possibility of substitution of only the bottom part of the pre-chamber.

In the following, the invention is further explained in embodiments by means of figures:
- Figure 1:: A schematic sectional view of a pre-chamber bottom section;
- Figure 2:: A schematic cross-sectional view of a pre-chamber;
- Figure 3:: A schematic cross-sectional view of figure 2 rotated by 90°;
- Figure 4:: A schematic cross-sectional view of a cylinder cover comprising two pre-chambers.

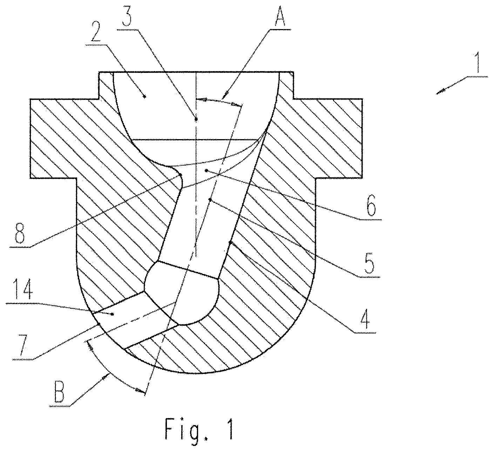

Figure 1 shows a pre-chamber bottom section 1 according to the invention. The pre-chamber bottom section 1 comprises an ignition chamber lower part 2 having a vertical axis 3. The ignition chamber lower part 2 can be combined with an ignition chamber top part (not shown) to form a complete ignition chamber (not shown). From the ignition chamber lower part 2 the duct 4 extends downward. Between the ignition chamber lower part 2 and the duct 4 an inlet opening 6 is arranged. The duct 4 further comprises a duct longitudinal axis 5 which is inclined relative to the vertical axis 3 by an inclination A of substantially 18°. The duct 4 further comprises a duct section 14 being inclined relative to the vertical axis 3 at a second inclination B of substantially 65°. Between the duct 4 and the duct section 14 a spherical widening is arranged. The inlet opening 6 which is arranged such that the duct 4 opens out into an ignition chamber lower part 2 substantially tangential on the one side. The edge 8 of the inlet opening 6 is designed as a smooth or soft edge to on the one side optimize the flow of the gas-air mixture and on the other side inhibit the creation of hot spots in the material of the pre-chamber bottom section 1. The duct section 14 comprises an outlet opening 7 which is designed such that a gas/air mixture beam is asymmetrically distributed relative to the vertical axis 3.

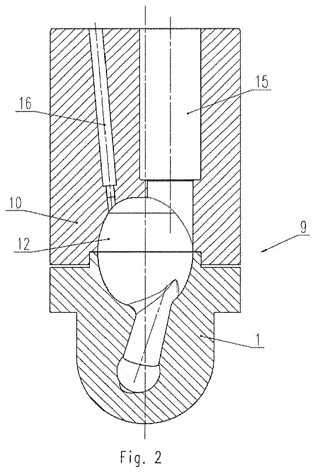

Figure 2 shows a first cross-section of a pre-chamber 9 according to the invention. The pre-chamber 9 comprises a pre-chamber bottom section 1 (as shown in figure 1) and a pre-chamber top section 10. The pre-chamber top section 10 is oval shaped with smooth curved walls. A flow motion coming from the duct 4 is further guided by the upper part of the oval shape of the ignition chamber 12. For this purpose, the pilot injection means 15 protrude into the ignition chamber 12 as little as possible. The volume of the ignition chamber 12 is dependent on a piston diameter of the cylinder used and should be selected accordingly. The dimensions of the ignition chamber 12 corresponds to a ratio of the length of the vertical axis inside the ignition chamber 12 and the simple transverse axis at the widest point of the ignition chamber 12. The ratio is preferably chosen to be between 0.6 and 1.8. The embodiment according to figure 2 additionally comprises a glow plug 16 which can be used if necessary.

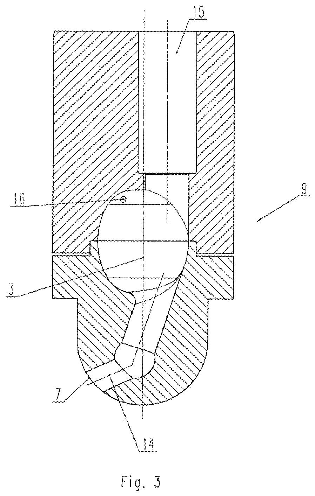

Figure 3 shows the pre-chamber 9 of figure 2 from a perspective being 90° rotated. This perspective shows the duct section 14 and the outlet opening 7 as shown in figure 1. Since the outlet opening 7 is arranged asymmetrically relative to the vertical axis 3 the outlet opening 7 was not visible in figure 2. The pilot injection means 15 is located on a first side of the vertical axis 3 whereas the glow plug 16 is located on the other side of the vertical axis 3.

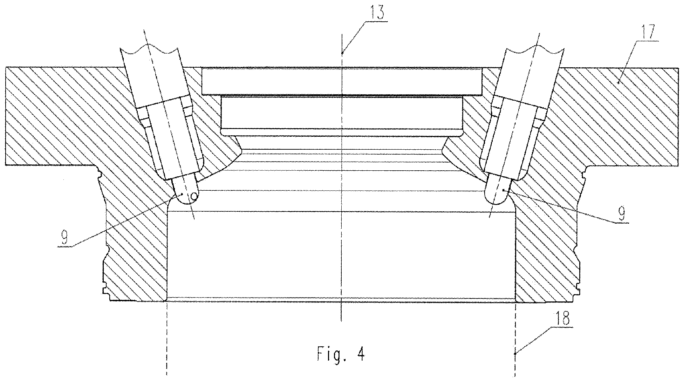

Figure 4 shows a cross-sectional view of a cylinder cover 17 comprising two pre-chambers 9 (as shown in figures 2 and 3) arranged close to an inner diameter of the cylinder liner 18. The gas-air-mixture is compressed within the cylinder (not shown completely) and pressed into the pre-chambers 9. To optimize the ignition behaviour additional gas is added into the pre-chamber. By means of a pilot injection or a glow plug the gas-air-mixture is ignited and introduced into the main combustion chamber of the cylinder (indicated by cylinder liner 18).

## Claims

1. Cylinder device comprising two pre-chambers (9) for ignition of a gas/air mixture in an internal combustion engine, each pre-chamber comprising a pre-chamber bottom section (1) and a pre-chamber top section (10),
wherein each pre-chamber bottom section (1) comprises an ignition chamber lower part (2) with a vertical axis (3) for igniting of the gas-air-mixture and a duct (4) that connects the ignition chamber lower part (2) with a duct section (14) that connects with a main combustion chamber of the cylinder,
wherein the duct (4) comprises at least one duct longitudinal axis (5) and
an inlet opening (6) of the duct (4) to the ignition chamber lower part (2) is formed such that the vertical axis (3) has an inclination (A) relative to the duct longitudinal axis (5), and
the inlet opening (6) is arranged eccentrically, such that a tumble flow motion is formable in an ignition chamber, and wherein the duct section (14) comprises exactly one outlet opening (7) which is arranged such that a gas-air mixture beam is formable being asymmetrically distributed relative to the vertical axis (3), and wherein edges (8) at the inlet opening (6) are designed as soft edges, **characterized in that** the duct (4) comprises the duct section (14) which is inclined relative to the duct longitudinal axis (5), enabling an asymmetric distribution of the ignited gas-air mixture, such that the gas/air mixture is fed into the swirl of the gas-air stream within the combustion chamber.

2. Cylinder device according to claim 1, **characterized in that** the duct longitudinal axis is arranged at an angle of substantially 0.1° to 80° relative to the vertical axis, preferably 10°to 45° and most preferably 16° to 30° relative to the vertical axis.

3. Cylinder device according to any one of the preceding claims, **characterized in that** the ignited gas/air mixture beam is introducible from the outlet opening into the main combustion chamber only within a spherical sector of max. 180° radially around the vertical axis and 90° axially to the vertical axis.

4. Cylinder device according to any one of the preceding claims, **characterized in that** a cross-section of the duct and/or the duct section tapers from inlet opening to outlet opening.

5. Cylinder device according to any one of claims 1 to 4, **characterized in that** the inclination of the duct section relative to the vertical axis is in a range from von 0.2° to 90°, preferably 20° to 80°, more preferably 45° to 66°.

6. Cylinder device according to any one of the preceding claims, **characterized in that** the duct is designed in a curved way, preferably comprising a radius of curvature in a range of one half times a maximum cross section of the ignition chamber normal to the vertical axis to two times a maximum cross section of the ignition chamber normal to the vertical axis.

7. Cylinder device according to any one of the preceding claims, **characterized in that** the pre-chambers (9) comprise ignition means (11) for ignition of the gas-air mixture, preferably an ignition plug, which extends into an ignition chamber (12).

8. Cylinder device according to any one of the preceding claims, **characterized in that** the pre-chamber top sections (10) are designed asymmetrically relative to the vertical axis (3).

9. Cylinder device according to any one of the preceding claims, **characterized in that** the two pre-chambers are arranged in a cylinder cover.

10. Cylinder device according to claim 9, **characterized in that** the pre-chambers are arranged eccentrically close to the edge of the cylinder device, preferably close to the edge of the cylinder cover.

11. Method for mixing of a gas/air mixture and ignition of the mixture in pre-chambers (9) of a cylinder device according to any one of claims 1 to 10, wherein gas is mixed with air to create a gas-air mixture and then fed into the pre-chamber (9), and wherein said gas-air mixture is ignited, wherein a tumble flow motion is created in the pre-chambers (9) and the ignited gas-air mixture is fed into the main combustion chamber through the ducts (4), **characterized in that** a flow of ignited gas-air mixture is deflected inside the ducts (4) and a flow velocity of the gas-air mixture is increased in the ducts (4), and **in that** two gas-air mixture beams are formed each being asymmetrically distributed relative to the vertical axis (3) and fed to the main combustion chamber asymmetrically relative a vertical axis (13) of the main combustion chamber and into the swirl of the gas-air stream within the combustion chamber.

## Patentansprüche

1. Zylindervorrichtung, die zwei Vorkammern (9) zum Entzünden eines Gas-Luft-Gemischs in einem Verbrennungsmotor umfasst, wobei jede Vorkammer einen unteren Vorkammerabschnitt (1) und einen oberen Vorkammerabschnitt (10) umfasst,
wobei jeder untere Vorkammerabschnitt (1) einen unteren Teil (2) einer Zündkammer mit einer vertikalen Achse (3) zum Entzünden des Gas-Luft-Gemischs und einen Kanal (4) umfasst, der den unteren Teil (2) der Zündkammer mit einem Kanalabschnitt (14), der mit einer Hauptbrennkammer des Zylinders verbunden ist, verbindet,
wobei der Kanal (4) mindestens eine Kanallängsachse (5) umfasst und eine Einlassöffnung (6) des Kanals (4) zu dem unteren Teil (2) der Zündkammer so ausgebildet ist, dass die vertikale Achse (3) relativ zu der Kanallängsachse (5) eine Neigung (A) aufweist, und
die Einlassöffnung (6) exzentrisch angeordnet ist, sodass in einer Zündkammer eine Taumelströmungsbewegung formbar ist, und wobei der Kanalabschnitt (14) exakt eine Auslassöffnung (7) umfasst, die so angeordnet ist, dass ein Gas-Luft-Gemisch-Strahl formbar ist, der relativ zu der vertikalen Achse (3) asymmetrisch verteilt wird, und wobei Kanten (8) an der Einlassöffnung (6) als weiche Kanten konstruiert sind, **dadurch gekennzeichnet, dass** der Kanal (4) den Kanalabschnitt (14) umfasst, der relativ zu der Kanallängsachse (5) geneigt ist und eine asymmetrische Verteilung des entzündeten Gas-Luft-Gemischs ermöglicht, sodass das Gas-Luft-Gemisch in den Wirbel des Luft-Gas-Stroms innerhalb der Brennkammer eingespeist wird.

2. Zylindervorrichtung nach Anspruch 1, **dadurch gekennzeichnet, dass** die Kanallängsachse relativ zu der vertikalen Achse in einem Winkel von im Wesentlichen 0,1° bis 80° angeordnet ist, vorzugsweise 10° bis 45°, und am stärksten bevorzugt 16° bis 30° relativ zu der vertikalen Achse.

3. Zylindervorrichtung nach einem der vorangehenden Ansprüche, **dadurch gekennzeichnet, dass** der entzündete Gas-Luft-Gemischstrahl von der Auslassöffnung in die Hauptbrennkammer nur innerhalb eines runden Sektors von maximal 180° radial rings um die vertikale Achse und 90° axial zu der vertikalen Achse einführbar ist.

4. Zylindervorrichtung nach einem der vorangehenden Ansprüche, **dadurch gekennzeichnet, dass** sich ein Querschnitt des Kanals und/oder des Kanalabschnitts von einer Einlassöffnung zu einer Auslassöffnung verjüngt.

5. Zylindervorrichtung nach einem der Ansprüche 1 bis 4, **dadurch gekennzeichnet, dass** die Neigung des Kanalabschnitts relativ zu der vertikalen Achse in einem Bereich von 0,2° bis 90°, vorzugsweise 20° bis 80°, und stärker bevorzugt 45° bis 66° liegt.

6. Zylindervorrichtung nach einem der vorangehenden Ansprüche, **dadurch gekennzeichnet, dass** der Kanal in einer gebogenen Weise gestaltet ist und vorzugsweise einen Bogenradius in dem Bereich von einer Hälfte eines maximalen Querschnitts der Zündkammer senkrecht zu der vertikalen Achse bis zum Doppelten eines maximalen Querschnitts der Zündkammer senkrecht zu der vertikalen Achse umfasst.

7. Zylindervorrichtung nach einem der vorangehenden Ansprüche, **dadurch gekennzeichnet, dass** die Vorkammern (9) ein Zündmittel (11) zum Entzünden des Gas-Luft-Gemischs, vorzugsweise eine Zündkerze, umfassen, das sich in eine Zündkammer (12) erstreckt.

8. Zylindervorrichtung nach einem der vorangehenden Ansprüche, **dadurch gekennzeichnet, dass** die oberen Abschnitte (10) der Vorkammer relativ zu der vertikalen Achse (3) asymmetrisch gestaltet sind.

9. Zylindervorrichtung nach einem der vorangehenden Ansprüche, **dadurch gekennzeichnet, dass** die zwei Vorkammern in einer Zylinderabdeckung angeordnet sind.

10. Zylindervorrichtung nach Anspruch 9, **dadurch gekennzeichnet, dass** die Vorkammern exzentrisch in der Nähe der Kante der Zylindervorrichtung angeordnet sind, vorzugsweise in der Nähe der Kante der Zylinderabdeckung.

11. Verfahren zum Mischen eines Gas-Luft-Gemischs und Entzünden der Mischung in Vorkammern (9) einer Zylindervorrichtung nach einem der Ansprüche 1 bis 10, wobei Gas mit Luft gemischt wird, um ein Gas-Luft-Gemisch zu erzeugen, und dann in die Vorkammer (9) eingespeist wird, und wobei das Gas-Luft-Gemisch entzündet wird, wobei in den Vorkammern (9) eine Taumelströmungsbewegung erzeugt wird und das entzündete Gas-Luft-Gemisch durch die Kanäle (4) in die Hauptbrennkammer eingespeist wird, **dadurch gekennzeichnet, dass** ein Strom von entzündetem Gas-Luft-Gemisch innerhalb der Kanäle (4) abgelenkt wird und sich eine Strömungsgeschwindigkeit des Gas-Luft-Gemischs in den Kanälen (4) erhöht, und dadurch, dass zwei Gas-Luft-Gemischstrahlen gebildet werden, die relativ zu der vertikalen Achse (3) jeweils asymmetrisch verteilt sind und asymmetrisch relativ zu einer vertikalen Achse (13) der Hauptbrennkammer zu der Hauptbrennkammer und in den Wirbel des Gas-Luft-Stroms innerhalb der Brennkammer eingespeist werden.

## Revendications

1. Dispositif à cylindre comprenant deux préchambres (9) pour l'allumage d'un mélange de gaz/d'air dans un moteur à combustion interne, chaque préchambre comprenant une section inférieure de préchambre (1) et une section supérieure de préchambre (10), chaque section inférieure de préchambre (1) comprenant une partie inférieure de chambre d'allumage (2) avec un axe vertical (3) pour allumer le mélange de gaz et d'air et un conduit (4) qui relie la partie inférieure de chambre d'allumage (2) à une section de conduit (14) qui se raccorde à une chambre de combustion principale du cylindre,
le conduit (4) comprenant au moins un axe longitudinal de conduit (5) et
une ouverture d'entrée (6) du conduit (4) dans la partie inférieure de chambre d'allumage (2) étant formée de telle sorte que l'axe vertical (3) présente une inclinaison (A) par rapport à l'axe longitudinal de conduit (5), et
l'ouverture d'entrée (6) étant disposée de manière excentrique de telle sorte qu'un mouvement d'écoulement de culbutage puisse se former dans une chambre d'allumage, et la section de conduit (14) comprenant exactement une ouverture de sortie (7) qui est disposée de telle sorte qu'un jet de mélange de gaz et d'air puisse être formé, lequel est réparti de manière asymétrique par rapport à l'axe vertical (3), et des bords (8) au niveau de l'ouverture d'entrée (6) étant conçus sous forme de bord doux, **caractérisé en ce que** le conduit (4) comprend la section de conduit (14) qui est inclinée par rapport à l'axe longitudinal de conduit (5), permettant une répartition asymétrique du mélange de gaz et d'air enflammé, de telle sorte que le mélange de gaz/d'air soit acheminé dans le tourbillon du flux de gaz et d'air à l'intérieur de la chambre de combustion.

2. Dispositif à cylindre selon la revendication 1, **caractérisé en ce que** l'axe longitudinal de conduit est disposé suivant un angle de sensiblement 0,1° à 80° par rapport à l'axe vertical, de préférence de 10° à 45° et plus préférablement de 16° à 30° par rapport à l'axe vertical.

3. Dispositif à cylindre selon l'une quelconque des revendications précédentes, **caractérisé en ce que** le jet de mélange de gaz/d'air enflammé peut être introduit depuis l'ouverture de sortie jusque dans la chambre de combustion principale uniquement à l'intérieur d'une plage sphérique de 180° au maximum radialement autour de l'axe vertical et de 90° axialement par rapport à l'axe vertical.

4. Dispositif à cylindre selon l'une quelconque des revendications précédentes, **caractérisé en ce qu'**une section transversale du conduit et/ou de la section de conduit s'effile depuis l'ouverture d'entrée vers l'ouverture de sortie.

5. Dispositif à cylindre selon l'une quelconque des revendications 1 à 4, **caractérisé en ce que** l'inclinaison de la section de conduit par rapport à l'axe vertical est dans une plage de 0,2° à 90°, de préférence de 20° à 80°, plus préférablement de 45° à 66°.

6. Dispositif à cylindre selon l'une quelconque des revendications précédentes, **caractérisé en ce que** le conduit est sous forme courbe, de préférence comprenant un rayon de courbure dans une plage d'une demi-fois une section transversale maximale de la chambre d'allumage perpendiculairement à l'axe vertical, à deux fois une section transversale maximale de la chambre d'allumage perpendiculairement à l'axe vertical.

7. Dispositif à cylindre selon l'une quelconque des revendications précédentes, **caractérisé en ce que** les préchambres (9) comprennent un moyen d'allumage (11) pour allumer le mélange de gaz et d'air, de préférence une bougie d'allumage qui s'étend jusque dans une chambre d'allumage (12).

8. Dispositif à cylindre selon l'une quelconque des revendications précédentes, **caractérisé en ce que** les sections supérieures de préchambres (10) sont conçues de manière asymétrique par rapport à l'axe vertical (3).

9. Dispositif à cylindre selon l'une quelconque des revendications précédentes, **caractérisé en ce que** les deux préchambres sont disposées dans un couvercle de cylindre.

10. Dispositif à cylindre selon la revendication 9, **caractérisé en ce que** les préchambres sont disposées de manière excentrique à proximité du bord du dispositif à cylindre, de préférence à proximité du bord du couvercle de cylindre.

11. Procédé de mélange d'un mélange de gaz/d'air et d'allumage du mélange dans des préchambres (9) d'un dispositif à cylindre selon l'une quelconque des revendications 1 à 10, dans lequel du gaz est mélangé avec de l'air pour créer un mélange de gaz et d'air puis est acheminé dans la préchambre (9), et dans lequel ledit mélange de gaz et d'air est enflammé, un mouvement d'écoulement de culbutage étant créé dans les préchambres (9) et le mélange de gaz et d'air enflammé étant acheminé dans la chambre de combustion principale à travers les conduits (4), **caractérisé en ce qu'**un écoulement du mélange de gaz et d'air enflammé est dévié à l'intérieur des conduits (4) et une vitesse d'écoulement du mélange de gaz et d'air est augmentée dans les conduits (4), et **en ce que** deux jets de mélange de gaz et d'air sont formés, chacun étant réparti de manière asymétrique par rapport à l'axe vertical (3) et étant acheminé à la chambre de combustion principale de manière asymétrique par rapport à un axe vertical (13) de la chambre de combustion principale jusque dans le tourbillonnement du flux de gaz et d'air à l'intérieur de la chambre de combustion.
